# DEMANDE DE BREVET EUROPEEN

(11) **EP 1 589 737 A1**
(43) Date de publication de la demande: **26.10.2005**
(21) Numéro de dépôt: 04010732.8
(22) Date de dépôt: 06.05.2004
(51) Int. Cl.: H04M 3/533, H04M 1/725

(54) **Procédé pour enregistrer un message audio et serveur de messagerie vocale associé**

(30) Priorité: 22.04.2004 FR 0304939
(71) Demandeur: FRANCE TELECOM, 75015 Paris (FR)
(72) Inventeur: George, Lise, 75011 paris (FR)
(74) Mandataire: Stephann, Valérie Annabelle

(57) **Abrégé**

Le procédé permet d'enregistrer un message audio destiné à un utilisateur destinataire (B), auprès d'un serveur de messagerie vocale SMV (2), à partir d'un terminal de communication (T_{A}) d'un utilisateur émetteur (A). Lors d'une session de communication entre le terminal (T_{A}) de l'utilisateur émetteur et du serveur SMV (2) à travers un réseau (1), une étape d'enregistrement du message, par le terminal d'utilisateur émetteur (A), auprès du serveur SMV (2), comportant une succession d'opérations consistant chacune
- à saisir une composante audio de message à l'aide du terminal de l'utilisateur émetteur (A) et
- à enregistrer ladite composante audio dans une première base de données (21) du serveur SMV,
afin d'enregistrer N composantes audio formant le message.

## Description

La présente invention concerne un procédé pour enregistrer un message audio, un procédé pour consulter ledit message audio et des serveurs de messagerie vocale pour la mise en oeuvre de ces procédés.

La plupart des réseaux de téléphonie, fixe ou mobile, proposent à leurs utilisateurs un service de messagerie vocale. Lorsqu'un utilisateur de ce service reçoit un appel alors qu'il est déjà en ligne ou absent, un serveur de messagerie vocale prend l'appel et invite l'appelant à laisser un message. Le message vocal de l'appelant est enregistré dans une première base de données et un pointeur, destiné à repérer la position du message dans cette première base de données, est associé à un profil de l'utilisateur appelé, mémorisé dans la seconde base de données. Lorsque l'utilisateur appelé souhaite ultérieurement consulter le message reçu, il appelle le serveur de messagerie vocale et, sur requête, écoute le message.

Pour enrichir le contenu des messages audio, et perfectionner ainsi la messagerie vocale, il est connu de créer des messages audio comportant plusieurs composantes audio. Dans EP 1056267, le terminal expéditeur crée localement un message à plusieurs composantes comportant différents éléments multimédia, constitués par exemple par des fichiers audio, et des instructions définissant la structure du message. Après avoir créé le message à plusieurs composantes, le terminal expéditeur envoie au serveur le message composite, c'est-à-dire les instructions sur la structure du message et les fichiers constituant les composantes du message, à un serveur de messagerie vocale qui le stocke. Lorsque le terminal destinataire récupère le message, le serveur SMV lit les instructions sur la structure du message et diffuse les composantes vers le terminal destinataire conformément à ces instructions. Ce procédé d'enregistrement de messages audio nécessite l'utilisation d'un éditeur de messages à plusieurs composantes dans le terminal expéditeur. Il n'est pas possible d'enregistrer un message à plusieurs composantes selon le procédé décrit dans EP 1056267, à l'aide d'un terminal expéditeur standard, c'est-à-dire non équipé d'un éditeur de messages à plusieurs composantes.

Le problème technique de l'invention est donc d'abord de permettre l'enregistrement de messages à plusieurs composantes à partir d'un terminal standard.

Pour résoudre ce problème US 2002/0110224 apporte une solution consistant à sélectionner à l'aide du terminal appelant au moins un fichier audio proposé par un serveur de messagerie vocale. Ce fichier audio, constituant une composante audio du message, sera par exemple diffusée en fond sonore associé à un message vocal lors de la consultation du message vocal par le terminal destinataire. Cette solution n'est toutefois pas entièrement satisfaisante car elle limite fortement le choix des composantes audio constituant le message.

La présente invention propose donc de permettre l'enregistrement d'un message audio comportant des composantes audio variées à l'aide d'un terminal standard.

A cet effet, l'invention concerne un procédé pour enregistrer un message audio destiné à un utilisateur destinataire, auprès d'un serveur de messagerie vocale SMV, à partir d'un terminal de communication d'un utilisateur émetteur, caractérisé en ce qu'il comprend, lors d'une session de communication entre le terminal de l'utilisateur émetteur et du serveur SMV à travers un réseau, une étape d'enregistrement du message, par le terminal d'utilisateur émetteur, auprès du serveur SMV, comportant une succession d'opérations consistant chacune
- à saisir une composante audio de message à l'aide du terminal de l'utilisateur émetteur et
- à enregistrer ladite composante audio dans une première base de données du serveur SMV,
afin d'enregistrer N composantes audio formant le message.

Dans l'invention, chaque composante audio du message est saisie à l'aide du terminal émetteur et concomitamment enregistrée, par le serveur SMV en temps réel lors d'une session de communication entre le serveur et le terminal émetteur. Un utilisateur peut ainsi enregistrer un message ayant plusieurs composantes destinées à être superposées temporellement lors de leur diffusion, autrement dit à être diffusées simultanément. Le contenu du message peut ainsi être facilement enrichi par superposition de composantes successives qui peuvent être extrêmement variées. Le message enrichi peut, par exemple, contenir une composante "parlée" à laquelle une composante musicale est ensuite superposée. Plusieurs personnes peuvent également enregistrer l'une après l'autre différentes composantes afin de créer un message "multi-composantes" obtenu par superposition des composantes respectives des différentes personnes.

Dans EP 1056267, le serveur SMV est doté de moyens pour interpréter les instructions concernant la structure du message alors que le serveur SMV de l'invention doit simplement être capable de diffuser simultanément les différentes composantes audio, la synchronisation de celles-ci ayant été faite au moment de l'enregistrement.

De préférence, il est prévu une étape d'enregistrement, dans un profil de l'utilisateur destinataire, situé dans une seconde base de données, d'un groupe de N pointeurs, associé au message, les N pointeurs étant destinés respectivement à repérer les positions des N composantes audio du message dans la première base de données.

Avantageusement, pendant l'enregistrement d'une composante audio, le serveur envoie simultanément vers le terminal les précédentes composantes audio enregistrées. L'utilisateur peut ainsi aisément synchroniser les durées des composantes successivement enregistrées.

De préférence, après l'enregistrement de chaque composante audio, le terminal sélectionne l'une des étapes suivantes:
- diffusion de la ou des précédente(s) composante(s) audio enregistrée(s),
- enregistrement de la composante audio suivante ou
- fin de l'enregistrement,
et, le cas échéant, après diffusion de la ou des précédente(s) composante(s) audio enregistrée(s), le terminal sélectionne l'une des sous-étapes suivantes:
- enregistrement de la composante audio suivante,
- suppression de la dernière composante audio enregistrée et
- fin de l'enregistrement,

L'invention concerne également un serveur de messagerie vocale SMV pour la mise en oeuvre du procédé précédemment défini, associé à une première base de données contenant des composantes de message audio caractérisé en ce qu'il comprend des moyens d'enregistrement d'un message audio destiné à un utilisateur, agencés pour enregistrer N composantes audio formant le message, dans la première base de données, lors d'une session de communication entre le serveur SMV et un terminal d'utilisateur émetteur durant laquelle le terminal de l'utilisateur émetteur saisit successivement les N composantes pour les enregistrer auprès du serveur SMV.

L'invention sera mieux comprise à l'aide de la description suivante d'un mode de réalisation particulier du procédé de l'invention pour enregistrer un message audio, d'un mode de réalisation particulier du procédé de l'invention pour consulter ledit message audio et d'une forme de réalisation particulière du serveur de messagerie vocale de l'invention, en référence aux dessins annexés sur lesquels:
- la figure 1 représente une vue schématique du serveur de messagerie vocale et de deux terminaux de communication, reliés à travers un réseau;
- la figure 2 représente un schéma bloc fonctionnel du serveur de messagerie vocale de la figure 1;
- les figures 3A et 3B représentent un organigramme des étapes du procédé pour enregistrer un message et
- la figure 4 représente un organigramme des étapes du procédé pour consulter le message enregistré.

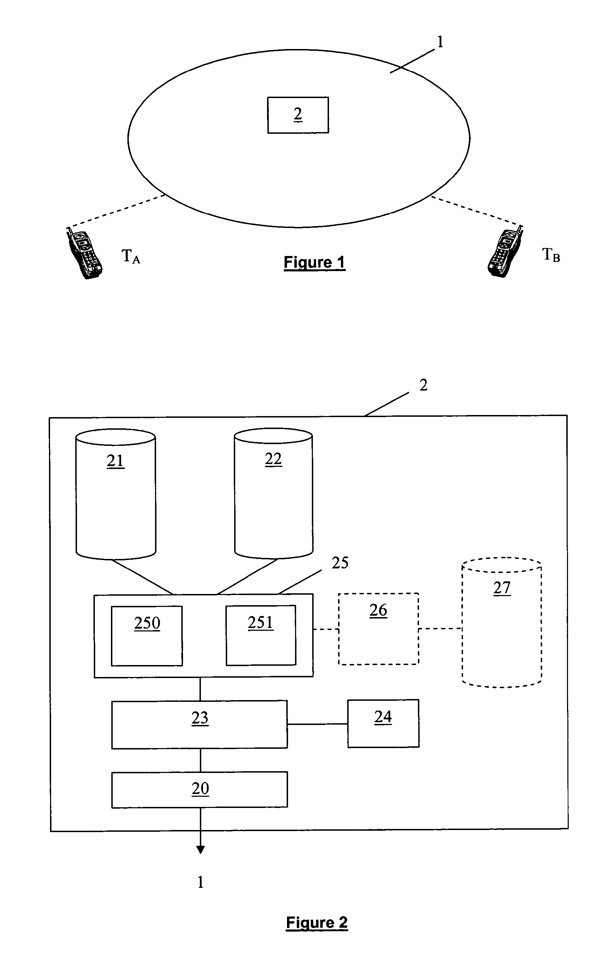

Sur la figure 1, on a représenté un réseau de communication, en l'espèce un réseau téléphonique cellulaire 1, un terminal de communication T_{A} d'un utilisateur A, un terminal de communication T_{B} d'un utilisateur B et un serveur de messagerie vocale (SMV) 2 du réseau téléphonique 1. Les terminaux T_{A} et T_{B} sont ici des téléphones cellulaires du réseau 1.

En référence à la figure 2, le serveur de messagerie vocale 2 comprend une interface 20 de connexion au réseau 1, une première base de données "messages" 21, une seconde base de données "utilisateurs" 22, un module 23 de communication terminal/serveur, un module d'identification 24 et un module 25 d'enregistrement et de consultation de messages. Le serveur SMV 2 propose à des utilisateurs, ou abonnés, du réseau téléphonique 1 un service de messagerie vocale leur permettant de recevoir des messages audio dans une boîte de messagerie vocale et de les consulter ultérieurement. Les messages reçus peuvent être "simples" ou "multi-composantes". Par définition, un message "multi-composantes" est formé d'une pluralité de composantes audio superposées temporellement, alors qu'un message "simple", ou ordinaire, ne comprend qu'une seule composante.

La première base de données "messages" 21 est destinée à stocker des composantes de messages audio.

La seconde base de données "utilisateurs" 22 est destinée à stocker les profils des utilisateurs du serveur de messagerie vocale 2. Chaque profil d'utilisateur contient des données personnelles d'identification de l'utilisateur et, pour chaque message enregistré auprès du serveur SMV 2 et destiné à cet utilisateur, un ou plusieurs pointeur(s) associé(s) au message dans la base de données "messages" 21. Dans le cas d'un message simple, un seul pointeur, destiné à repérer la position du message luimême dans la base de données "messages" 21, est associé au profil de l'utilisateur. Dans le cas d'un message comportant N composantes audio, un groupe de N pointeurs, respectivement destinés à repérer les positions des N composantes du message dans la première base de données "messages" 21, est associé au profil de l'utilisateur.

Le module 23 de communication serveur/terminal, interposé entre l'interface réseau 20 et le module 25 d'enregistrement et de consultation de messages, gère, de façon connue, la communication entre le serveur de messagerie vocale 2 et un terminal de communication accédant au service de messagerie vocale pour enregistrer ou consulter un message. Dans l'exemple particulier de la description, les commandes et les requêtes envoyées par un terminal au serveur SMV 2 sont constituées de codes DTMF générés par appui sur des touches du terminal. On pourrait envisager tout autre type de commandes et de requêtes, par exemple des requêtes et des commandes de type vocal.

Le module d'identification 24, relié au module de communication serveur/terminal 23, est destiné à identifier un utilisateur accédant au service de messagerie vocale et souhaitant notamment consulter un message ou modifier son profil. Ce module 24 est connecté au module 23 de communication serveur/terminal.

Le module 25 d'enregistrement et de consultation de messages comprend un bloc 250 d'enregistrement de messages et un bloc 251 de consultation de messages.

Le bloc d'enregistrement 250 est agencé pour enregistrer des messages dans la base de données "messages" 21. Lors de l'enregistrement d'un message, le bloc d'enregistrement 250 enregistre le message, dans le cas d'un message simple, ou les N composantes du message, dans le cas d'un message multi-composantes, dans la première base de données "messages" 21 et, parallèlement, mémorise le pointeur, ou le groupe de N pointeurs, associé au message dans la seconde base de données "utilisateurs" 22. Dans le cas d'un message multi-composantes, les N pointeurs sont respectivement destinés à repérer les positions des N composantes audio dans la première base de données 21. Le bloc d'enregistrement 250 est également agencé pour supprimer, totalement ou partiellement, les messages dans la base de données "messages" 21 et, parallèlement, les pointeurs, ou groupes de pointeurs, correspondants dans la base de données "utilisateurs" 22.

Le bloc 251 de consultation de messages est agencé pour, sur réception d'une requête en consultation de message provenant d'un terminal:
- rechercher dans la base de données "utilisateurs" 22, dans le profil de l'utilisateur considéré, soit un seul pointeur soit un groupe de N pointeurs, selon la nature du message (simple ou multi-composantes), associé au message,
- puis, à l'aide de ce ou ces pointeurs, repérer dans la première base de données "messages" 21 soit la position du message, soit les positions respectives des N composantes du message,
- et enfin envoyer soit le message simple, soit les N composantes audio formant le message, simultanément, vers le terminal de l'utilisateur.

### Procédé d'enregistrement

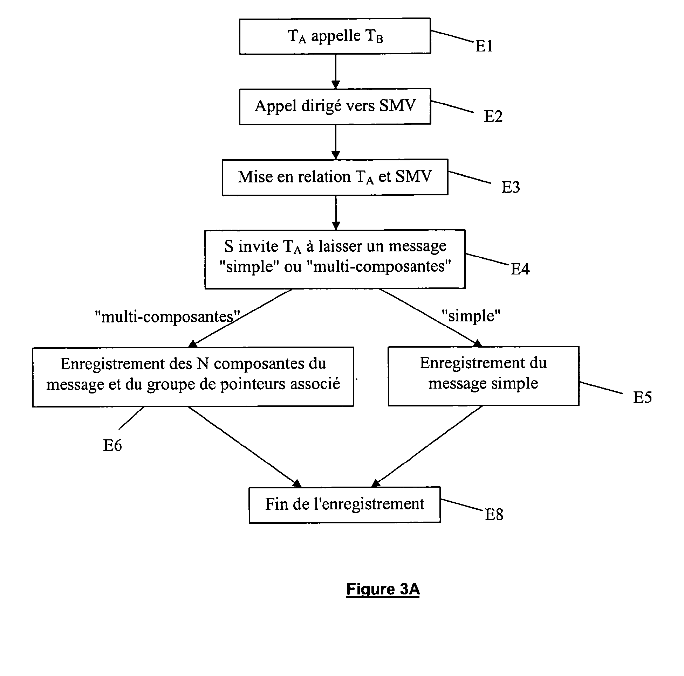

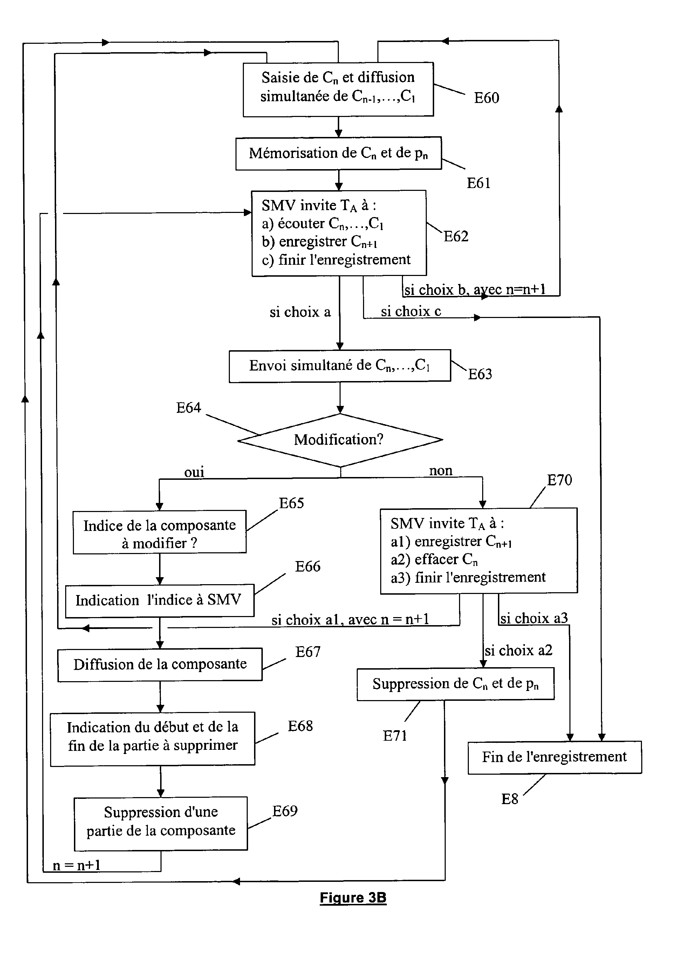

Le procédé pour enregistrer un message, correspondant au fonctionnement du serveur de messagerie vocale SMV 2, va maintenant être explicité en référence aux figures 3A et 3B.

En référence à la figure 3A, dans une étape E1, le terminal T_{A} appelle le terminal T_{B}. En l'absence de réponse, l'appel du terminal T_{A} est dirigé vers le serveur de messagerie vocale SMV 2 (étape E2) et, dans une étape E3, le terminal T_{A} est mis en relation avec le serveur SMV 2. Dans une étape E4, le serveur SMV 2 invite l'utilisateur A à laisser soit un message "simple", soit un message "multi-composantes", pour l'utilisateur B.

Si l'utilisateur A choisit de laisser un message simple, il enregistre son message auprès du serveur SMV 2, de façon connue. Le serveur SMV 2 mémorise le message dans la base de données "messages" 21 (étape E5) et, parallèlement, enregistre un pointeur destiné à repérer la position de ce message dans la base de données "messages" 21, dans le profil de l'utilisateur B situé dans la base de données "utilisateurs" 22.

Si l'utilisateur A choisit de laisser un message à plusieurs composantes, il enregistre successivement les N composantes audio de son message auprès du serveur SMV 2, dans une étape E6. Cette étape E6 est divisée en une succession de sous-étapes qui apparaissent sur la figure 3B. Par souci de clarté, on attribue à chacune des N composantes du message un indice n, n variant de 1 à N, et on appelle Cₙ la n^{ième} composante du message. Chaque composante Cₙ est saisie par l'utilisateur A lors d'une étape E60. Pendant cette opération de saisie de la n^{ième} composante Cₙ, sauf pour la 1^{ère} composante saisie C₁, le serveur SMV 2 diffuse simultanément la ou les n-1 précédente(s) composante(s) audio enregistrée(s) Cₙ₋₁, Cₙ₋₂,...,C₁ vers le terminal 2. Dans une étape E61, le serveur SMV 2 mémorise la composante Cₙ dans la base de données "messages" 21 et, parallèlement, enregistre dans la base de données "utilisateurs" 22, dans le profil de l'utilisateur B auquel le message est destiné, un pointeur pₙ destiné à repérer cette composante Cₙ dans la base de données "messages" 21. Après l'enregistrement de la composante Cₙ, le serveur SMV 2 invite le terminal T_{A}, dans une étape E62, à sélectionner l'une des trois options suivantes:
a) écouter le message temporaire formé par la ou les n précédente(s) composante(s) audio enregistrée(s) Cₙ, Cₙ₋₁,..., C₁,
b) enregistrer directement la composante audio suivante Cₙ₊₁ ou
c) terminer l'enregistrement du message.

### a) Ecoute de la ou des n précédente(s) composante(s)

En cas de sélection de l'option a), le serveur SMV 2 envoie simultanément les n précédentes composantes audio enregistrées Cₙ, Cₙ₋₁,...,C₁ vers le terminal T_{A}, dans une étape E63, afin de permettre à l'utilisateur A d'écouter le message temporaire formé par les composantes précédemment enregistrées et superposées temporellement.

Après l'étape d'écoute E63, le serveur SMV 2 effectue un test pour déterminer si le terminal T_{A} souhaite modifier l'une des précédentes composantes enregistrées (étape E64).

Si, après avoir écouté les précédentes composantes enregistrées, le terminal T_{A} souhaite modifier l'une d'entre elles, il adresse au serveur SMV 2 une requête en modification, ici par appui sur la touche "*". Sur réception de la requête en modification, le serveur SMV 2 invite le terminal T_{A} à lui indiquer l'indice de la composante qu'il souhaite modifier (étape E65). Par appui sur la touche du terminal T_{A} portant le numéro de l'indice de la composante à modifier, le terminal T_{A} indique au serveur SMV 2 la composante à modifier (étape E66). Le serveur SMV 2 diffuse alors cette composante (étape E67) et, pendant cette diffusion, le terminal T_{A} indique au serveur SMV 2 le début et la fin d'une partie de la composante à supprimer, ici par appui sur la touche "#" (étape E68). Le serveur SMV 2 supprime alors la partie de la composante telle qu'indiquée dans la base de données "messages" (étape E69). Après l'étape de suppression E69, l'étape E62 est réitérée.

Si, après avoir écouté les précédentes composantes enregistrées, le terminal T_{A} ne souhaite pas modifier l'une d'entre elles, le serveur SMV 2 invite le terminal 2 à sélectionner l'une des options suivantes (étape E70):
a1) enregistrer la composante audio suivante Cₙ₊₁,
a2) supprimer la dernière composante audio enregistrée Cₙ, et
a3) terminer l'enregistrement du message.

En cas de sélection de l'option a1), on passe à l'étape E60 afin d'enregistrer la composante audio suivante Cₙ₊₁.

En cas de sélection de l'option a2), le serveur SMV 2 supprime la composante audio Cₙ dans la base de données "messages" ainsi que, parallèlement, le pointeur correspondant pₙ dans le profil de l'utilisateur B situé dans la base de données "utilisateurs" (étape E71).

En cas de sélection de l'option a3), on passe à l'étape "fin de l'enregistrement" E8 au cours de laquelle la communication entre le serveur SMV 2 et le terminal T_{A} est interrompue.

### b) Enregistrement direct de la composante suivante Cₙ₊₁

En cas de sélection de l'option b) à l'étape E62, on passe à l'étape E60 afin d'enregistrer la composante suivante Cₙ₊₁.

### c) Fin de l'enregistrement

En cas de sélection de l'option c) à l'étape E62, on passe à l'étape "fin de l'enregistrement" E8, au cours de laquelle la communication entre le terminal T_{A} et le serveur SMV 2 est interrompue.

Chaque composante Cₙ est saisie par le terminal émetteur T_{A} et parallèlement enregistrée dans la base de données 21 du serveur SMV 2, en temps réel, lors d'une session de communication entre le terminal T_{A} et le serveur SMV 2. L'opération consistant à saisir la composante à l'aide du terminal émetteur T_{A} et à l'enregistrer parallèlement dans la base de données 21 du serveur SMV 2, lors d'une session de communication entre le serveur et le terminal T_{A}, est réitérée pour l'enregistrement de chaque composante. Le serveur SMV 2 enregistre ainsi successivement les N composantes audio {C₁,..., C_{N-1}, C_{N}} formant le message dans la base de données "messages" 21 et, parallèlement, dans le profil de l'utilisateur B situé dans la base de données "utilisateurs" 22, les N pointeurs {p₁,..., p_{N-1}, p_{N}} correspondants destinés à repérer les positions respectives des N composantes du message dans la base de données "messages" 21. Ces N pointeurs {p₁,..., p_{N-1}, p_{N}} forment un groupe unitaire de pointeurs, associé au message.

### Procédé de consultation

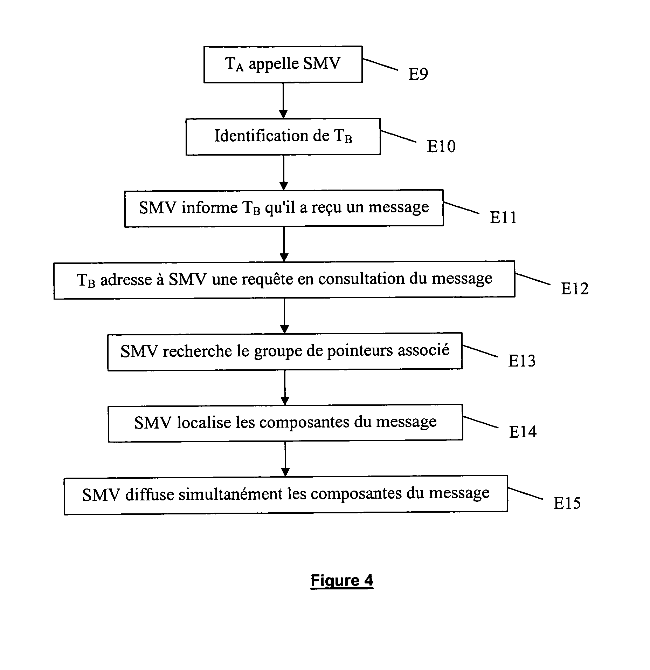

Le procédé de consultation, par le terminal T_{B}, du message enregistré auprès du serveur SMV 2 par l'utilisateur A et destiné à l'utilisateur B, correspondant au fonctionnement du serveur SMV 2, va maintenant être explicité en référence à la figure 4. On pourrait également envisager que le terminal T_{A} enregistre dans un boîte de messagerie vocale propre à l'utilisateur A des messages et consulte ultérieurement ceux-ci à l'aide de son terminal T_{A}.

Dans une étape E9, le terminal T_{B} de l'utilisateur B appelle le serveur de messagerie vocale SMV 2 afin d'être mis en relation avec lui. Le serveur SMV 2 procède ensuite, de façon connue, à l'identification du terminal T_{B} (étape E10). Après identification, le serveur SMV 2 informe l'utilisateur B qu'il a reçu un message (étape E11) et, sur invitation du serveur SMV 2, le terminal T_{B} lui adresse une requête afin de consulter le message reçu (étape E12). Sur réception de la requête en consultation du message, le serveur SMV 2 recherche dans la base de données "utilisateurs" 22 le groupe de pointeurs {p₁,..., p_{N-1}, p_{N}} associé au message à consulter, lequel est mémorisé dans le profil de l'utilisateur B (étape E13). Le serveur SMV 2 localise dans la base de données "messages" 21 les N composantes {C₁,..., C_{N-1}, C_{N}} formant le message à consulter, à l'aide des pointeurs du groupe {p₁,..., p_{N-1}, p_{N}} (étape E14). Le serveur SMV 2 diffuse ensuite simultanément les N composantes audio {C₁,..., C_{N-1}, C_{N}} formant le message vers le terminal T_{B} afin de permettre à l'utilisateur B d'écouter celui-ci (étape E15).

Dans une première variante de réalisation, le serveur de messagerie vocale comprend une troisième base de données contenant des fonds sonores (par exemple des chants d'oiseaux, le bruit de la mer, des mélodies, etc.). Lors de l'enregistrement d'un message par un terminal, celui-ci peut sélectionner un fond sonore parmi l'ensemble de fonds sonores proposés par le serveur SMV 2 afin de créer une composante "fond sonore" pour le message. Une telle fonctionnalité pourrait être utilisée pour créer des messages audio particulièrement raffinés à l'occasion d'événements particuliers comme, par exemple, un anniversaire, une naissance, etc..

Dans une seconde variante de réalisation, le serveur de messagerie vocale comprend un module de reconnaissance de hauteurs de notes, agencé pour transformer une composante musicale en une partition musicale par reconnaissance des hauteurs de notes, ainsi que différents modules de simulation numérique d'instrument de musique agencés pour faire jouer des partitions musicales par différents instruments de musique numériques. Lorsqu'un utilisateur enregistre une composante musicale, par exemple en chantant, le serveur peut transformer cette composante musicale en une partition musicale, par reconnaissance des hauteurs de notes chantées. Un instrument de musique numérique peut ensuite jouer la partition musicale afin de permettre à l'utilisateur de l'écouter. Le serveur de messagerie vocale pourrait également être agencé pour envoyer la partition musicale sous forme écrite au terminal, par exemple par messagerie électronique.

Le serveur de messagerie vocale pourrait également comprendre une base de données de morceaux de musique et être agencé pour analyser une composante musicale enregistrée par un utilisateur afin de reconnaître un morceau de musique parmi ceux stockés dans la base de données. En cas de reconnaissance d'un morceau musique, le serveur pourrait créer une composante audio de message à partir du morceau de musique ainsi reconnu.

Comme cela a déjà été précédemment évoqué, le procédé d'enregistrement de messages audio à plusieurs composantes auprès d'un serveur de messagerie vocale, précédemment décrit, pourrait également être utilisé pour fournir à un utilisateur un service de boîte vocale personnelle permettant d'enregistrer et de consulter ultérieurement des messages audio personnels, par exemple des compositions musicales personnelle, des notes personnelles ou des mémentos vocaux. Dans ce cas, le terminal de l'utilisateur émetteur enregistrerait les N composantes dans une boîte de messagerie vocale personnelle de l'utilisateur émetteur. Les différentes composantes d'un message personnel pourraient, dans ce cas, être enregistrées lors de différentes sessions de communication entre le terminal de l'utilisateur et le serveur de messagerie vocale, l'utilisateur pouvant ainsi modifier son message personnel lors de ces différentes sessions de communication en ajoutant, en supprimant ou en modifiant les composantes audio du message. L'utilisateur pourrait par exemple enregistrer un message, lors d'une première session de communication, puis modifier ce message à y ajoutant des commentaires, lors d'une seconde session de communication.

L'invention pourrait s'appliquer à tout type de réseau de communication, par exemple à un réseau de téléphonie fixe ou mobile, et à tout type de terminal pouvant communiquer à travers ce réseau.

Dans la description qui précède, les bases de données associées au serveur de messagerie vocale pourraient être externes à celui-ci. Dans ce cas, on pourrait envisager un premier serveur de messagerie vocale, dédié à l'enregistrement des messages, et un second serveur de messagerie, dédié à la consultation des messages, tous les deux reliés aux bases de données externes.

## Revendications

1. Procédé pour enregistrer un message audio destiné à un utilisateur destinataire (B), auprès d'un serveur de messagerie vocale SMV (2), à partir d'un terminal de communication (T_{A}) d'un utilisateur émetteur (A), **caractérisé en ce qu'**il comprend, lors d'une session de communication entre le terminal (T_{A}) de l'utilisateur émetteur et du serveur SMV (2) à travers un réseau (1), une étape d'enregistrement du message, par le terminal d'utilisateur émetteur (A), auprès du serveur SMV (2), comportant une succession d'opérations consistant chacune
- à saisir une composante audio de message à l'aide du terminal de l'utilisateur émetteur (A) et
- à enregistrer ladite composante audio dans une première base de données (21) du serveur SMV,
afin d'enregistrer N composantes audio formant le message.

2. Procédé selon la revendication 1, **caractérisé en ce que**, pendant l'enregistrement d'une composante audio, le serveur (2) envoie simultanément vers le terminal de l'utilisateur émetteur (T_{A}) les précédentes composantes audio enregistrées (E60).

3. Procédé selon l'une des revendications 1 et 2, **caractérisé en ce que**, après l'enregistrement de chaque composante audio, le terminal (T_{A}) sélectionne l'une des étapes suivantes (E62):
- diffusion de la ou des précédente(s) composante(s) audio enregistrée(s),
- enregistrement de la composante audio suivante ou
- fin de l'enregistrement,
et, le cas échéant, après diffusion de la ou des précédente(s) composante(s) audio enregistrée(s), le terminal (T_{A}) sélectionne l'une des sous-étapes suivantes (E69):
- enregistrement de la composante audio suivante,
- suppression de la dernière composante audio enregistrée et
- fin de l'enregistrement.

4. Procédé selon l'une des revendications 1 à 3, **caractérisé en qu'**il comporte une étape de modification de l'une des précédentes composantes audio enregistrées dans laquelle:
- le serveur (2) diffuse (E67) la composante à modifier vers le terminal (T_{A}) et
- durant la diffusion de la composante à modifier, le terminal (T_{A}) indique au serveur (2) le début et la fin d'une partie de ladite composante (E68) afin d'en commander la suppression (E69).

5. Procédé selon l'une des revendications 1 à 4, **caractérisé en ce que**, dans le cas où l'utilisateur enregistre une composante audio musicale, le serveur transforme la composante musicale en une partition musicale, par reconnaissance des hauteurs de notes chantées.

6. Procédé selon l'une des revendications 1 à 5, dans lequel le terminal sélectionne un fond sonore parmi un ensemble de fonds sonores proposés par le serveur afin de créer une composante du message.

7. Procédé selon l'une des revendications 1 à 6, dans lequel, dans le cas où l'utilisateur enregistre une composante audio musicale, le serveur analyse la composante musicale enregistrée afin de reconnaître un morceau de musique parmi une pluralité de morceaux de musique stockés dans une base de données et crée une composante de message à partir du morceau de musique reconnu.

8. Procédé selon l'une des revendications 1 à 7, dans lequel le terminal enregistre les N composantes audio formant le message lors de différentes sessions de communication avec le serveur.

9. Procédé selon l'une des revendications 1 à 8, dans lequel le terminal de l'utilisateur émetteur enregistre les N composantes dans une boîte de messagerie vocale personnelle de l'utilisateur émetteur.

10. Procédé selon l'une des revendications 1 à 9, dans lequel il est prévu une étape d'enregistrement (E6), dans un profil de l'utilisateur destinataire (B), situé dans une seconde base de données (22), d'un groupe de N pointeurs, associé au message, les N pointeurs étant destinés respectivement à repérer les positions des N composantes audio du message dans la première base de données (21).

11. Serveur de messagerie vocale SMV pour la mise en oeuvre du procédé de la revendication 1, associé à une première base de données (21) contenant des composantes de message audio **caractérisé en ce qu'**il comprend des moyens (250) d'enregistrement d'un message audio destiné à un utilisateur, agencés pour enregistrer N composantes audio formant le message, dans la première base de données (21), lors d'une session de communication entre le serveur SMV (2) et un terminal d'utilisateur émetteur (T_{A}) durant laquelle le terminal de l'utilisateur émetteur (T_{A}) saisit successivement les N composantes pour les enregistrer auprès du serveur SMV.

12. Serveur selon la revendication 11, **caractérisé en ce qu'**il comprend des moyens (250) pour supprimer l'une des composantes audio d'un message dans la première base de données et le pointeur correspondant dans la seconde base de données.

13. Serveur selon l'une des revendications 11 et 12, **caractérisé en ce qu'**il comprend des moyens de reconnaissance de hauteurs de notes destinés à transformer une composante musicale en une partition musicale.

14. Serveur selon l'une des revendications 11 à 13, **caractérisé en ce qu'**il comprend des moyens de liaison à une base de données de fonds sonores.

15. Serveur selon l'une des revendications 11 à 14, dans lequel il est prévu une seconde base de données (22) contenant des profils d'utilisateur et les moyens d'enregistrement d'un message audio sont agencés pour enregistrer, parallèlement à l'enregistrement du message audio, dans le profil de l'utilisateur auquel le message est destiné, un groupe de N pointeurs, associés au message, les N pointeurs étant respectivement destinés à repérer les positions des N composantes audio dans la première base de données (21).
